Europäisches Patentamt

**European Patent Office**

**Office européen des brevets**

(11) Numéro de publication : **0 020 219**
**B1**

(12) **FASCICULE DE BREVET EUROPÉEN**

(45) Date de publication du fascicule du brevet :
26.01.83

(51) Int. Cl.³ : **G 11 B 23/02**

(21) Numéro de dépôt : **80400649.2**

(22) Date de dépôt : **12.05.80**

(54) **Conteneur pour vidéodisque.**

(30) Priorité : **23.05.79 FR 7913203**

(43) Date de publication de la demande :
**10.12.80 Bulletin 80/25**

(45) Mention de la délivrance du brevet :
**26.01.83 Bulletin 83/04**

(84) Etats contractants désignés :
**NL**

(56) Documents cités :
**FR A 1 215 093**
**FR A 2 363 162**
**FR E 76 126**
**US A 3 931 644**

(73) Titulaire : **THOMSON-BRANDT**
**173, Boulevard Haussmann**
**F-75379 Paris Cedex 08 (FR)**

(72) Inventeur : **Di Campli, Dominique**
**THOMSON-CSF - SCPI 173, Bld Haussmann**
**F-75360 Paris Cedex 08 (FR)**
Inventeur : **Fichot, Bernard**
**THOMSON-CSF - SCPI 173, Bld Haussmann**
**F-75360 Paris Cedex 08 (FR)**
Inventeur : **Lainez, Lucien**
**THOMSON-CSF - SCPI 173, Bld Haussmann**
**F-75360 Paris Cedex 08 (FR)**

(74) Mandataire : **Thrierr, Françoise et al**
**THOMSON-CSF SCPI 173, Bld Haussmann**
**F-75379 Paris Cedex 08 (FR)**

Jouve, 18, rue St-Denis, 75001 Paris, France

Conteneur pour vidéodisque

La présente invention se rapporte à un conteneur pour vidéodisque comportant notamment un support pour le disque et une enveloppe de protection ayant une tranche ouverte qui permet l'introduction latérale de ce support dans cette enveloppe.

Elle constitue un perfectionnement au brevet français 2.324.089 intitulé « conteneur pour vidéodisque ».

Le mot conteneur dans la description ci-après est pris dans le sens le plus général et désigne des pochettes, cassettes de toute nature renfermant un support ou tiroir coulissant pour un disque vidéo, couramment appelé vidéodisque.

On sait qu'un vidéodisque doit satisfaire à un certain nombre de contraintes qui en aucun cas ne doivent nuire à la qualité des informations inscrites sur le disque. Ainsi les poussières impalpables, les traces de gras laissées par les empreintes digitales lors du transfert du vidéodisque dans un dispositif de lecture, modifient l'indice de réfraction des microcuvettes qui matérialisent l'information. La demande de certificat d'addition FR 2.363.162 décrit un conteneur pour vidéodisque comportant notamment un support pour le disque et une enveloppe de protection ayant une tranche ouverte qui permet l'introduction latérale de ce support dans cette enveloppe. Celle-ci est constituée par deux feuilles de matériau souple ou d'une feuille repliée, les parties repliées ou ces feuilles étant réunies par des bandes d'espacement permettant la préhension de l'enveloppe par ses bords latéraux. La partie des bandes d'espacement proche de la tranche ouverte de l'enveloppe est remplacée par des plaquettes rigides et les surfaces extérieures des zones adjacentes à ces plaquettes sont munies de striures par moletage afin de faciliter leur accrochage à l'aide de pinces prévues à cet effet.

La présente invention est relative à un conteneur pour vidéodisque facilitant le transfert du vidéodisque dans le dispositif de lecture sans risque de détérioration du vidéodisque lui-même.

Elle concerne plus particulièrement un conteneur ayant des moyens de préhension et d'entraînement de l'enveloppe constitués par les deux bords latéraux et des moyens de guidage pour centrer le vidéodisque sur le support réalisé dans un matériau plastique moulé. L'enveloppe est constituée par deux feuilles de matériau plastique souple ou d'une feuille dont une partie est repliée, une de ces feuilles ou l'une des parties repliées, étant préformée au niveau des deux marges de préhension. Ce préformage crée des faces internes de contact entre la partie repliée ou la feuille repliée et les bords du support. Ce préformage entraîne une épaisseur moindre de l'enveloppe au droit de ces faces de contact, que si ces parties repliées ou ces feuilles étaient réunies par des bandes d'espacement, permettant ainsi de réduire l'effort nécessaire à l'enroulement de l'enveloppe lors de sa manipulation dans un dispositif de lecture.

Selon l'invention, les deux feuilles ou les deux parties de la feuille repliée constituant l'enveloppe sont reliées par des marges de préhension comportant sur l'une de leurs faces des crans sur toute leur longueur. Ces crans forment des crémaillères pour la préhension et l'entraînement de l'enveloppe, parallèlement à ces marges, à l'intérieur d'un dispositif de lecture de vidéodisque.

Les caractéristiques et avantages de l'invention apparaîtront au cours de la description qui suit, illustrée par les figures suivantes représentant :

la figure 1, une vue en perspective d'une enveloppe de protection selon un mode de réalisation de la présente invention ;

la figure 2, une vue en perspective d'un support muni d'empreintes permettant d'écarter les deux parois internes de l'enveloppe.

Suivant un mode de réalisation antérieure décrit dans le brevet français 2 324 089, un conteneur pour vidéodisque comporte une enveloppe de protection dans laquelle est introduit un support pour le vidéodisque, des moyens de préhension et d'entraînement de l'enveloppe dans un dispositif de lecture de vidéodisque et des moyens de guidage pour centrer le vidéodisque sur le support.

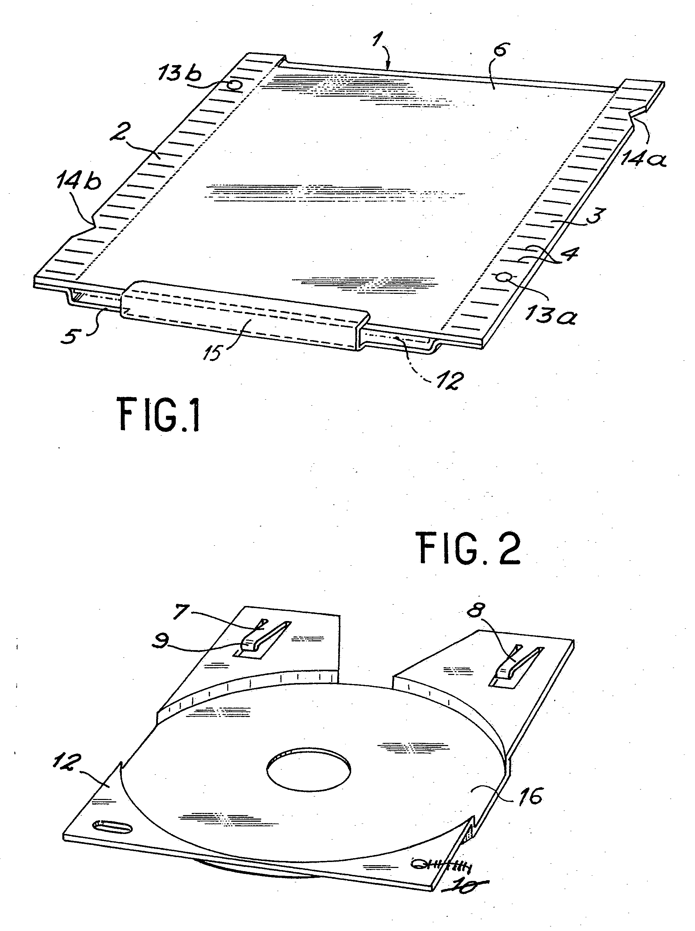

La figure 1 représente une enveloppe de protection d'un support 12 pour vidéodisque. Elle est constituée par deux feuilles 5 et 6 de matière plastique souple soudées, sur trois côtés, mais elle peut être aussi constituée par une seule feuille de matériau plastique repliée et soudée sur deux côtés opposés. Dans une variante de réalisation préférée, cette enveloppe est réalisée dans un matériau dont on utilise les pertes diélectriques pour souder les côtés, du polychlorure de vinyle (P.V.C.) par exemple.

Cette enveloppe 1 comporte des moyens de préhension et d'entraînement de celle-ci à l'intérieur d'un dispositif de lecture de vidéodisque, ces moyens étant constitués par les deux marges de préhension latérales 2 et 3 de l'enveloppe 1. Une des feuilles 5, ou l'une des parties repliées, est préformée au niveau des deux marges latérales de préhension et ce préformage crée les faces internes de contact entre la partie repliée, ou l'une des feuilles, et les bords du support 12.

Les deux marges latérales 2 et 3 de préhension et d'entraînement de l'enveloppe 1 comportent des crans 4 sur toute leur longueur. Ces crans 4 forment des crémaillères latérales qui servent à l'entraînement de l'enveloppe 1 lors de sa manipulation dans le dispositif de lecture.

Ces crans 4 sont réalisés lors de la soudure des marges 2, 3 à l'aide d'une électrode à crémaillère. Un module de 0,5 à 1 mm est satisfaisant pour donner des crans permettant l'entraînement direct de l'enveloppe 1. Comme cela a été réalisé auparavant, on place entre les deux feuilles au moment de la soudure, un gabarit dont l'épaisseur et la largeur correspondent aux côtés du support 12 contenant le disque. Une enveloppe constituée de deux feuilles de plastique distinctes, soudées sur trois côtés, à l'avantage de pouvoir être réalisée avec deux feuilles de rigidité et/ou d'épaisseur différentes. Ainsi, la feuille 6 quoique non préformée peut être plus rigide que la feuille 5 préformée. Son épaisseur peut être de l'ordre de 300 microns alors que la feuille 5 peut avoir 100 microns d'épaisseur environ, par exemple.

La feuille non préformée 6 a une face qui est en vis-à-vis avec la face gravée du vidéodisque. Une feuille de matériau non tissé ou de papier traité peut lui être fixée en vis-à-vis de la face gravée du vidéodisque. Dans le cas où le vidéodisque est gravé des deux côtés, on place une feuille analogue sur le support. Cela protège les deux faces des risques de détérioration présentés par les contacts, et les frottements, avec des surfaces inadaptées.

Des repères sont réalisés dans les marges 2 et 3 de l'enveloppe 1, sous forme de trous 13a, 13b ou d'encoches 14a, 14b. Ils permettent de commander le début et la fin des différentes phases du cycle d'injection du disque dans le lecteur ainsi que du cycle d'éjection grâce à des capteurs mécaniques ou optiques judicieusement positionnés sur le lecteur.

Pour éviter de perdre le vidéodisque en cours de manipulation ou de transport, la tranche ouverte de l'enveloppe peut être obturée à l'aide d'un rabat 15 en équerre réalisé en un matériau plastique rigide, comportant un petit côté dont l'extrémité est réunie de façon pivotable à l'extrémité adjacente de la paroi inférieure de celle-ci.

Sur la figure 2, est représenté le support 12 dans lequel un vidéodisque peut être centré grâce à des moyens de guidage constitués par le relief d'une empreinte 16 aménagée dans le support et présentant un diamètre correspondant à la circonférence du vidéodisque.

L'introduction ou l'extraction du support 12 à l'intérieur de l'enveloppe de protection est facilitée par des moyens d'emboîtement constitués par des empreintes 7 et 8 réalisées sur la partie avant du support 12. Ces empreintes 7 et 8, destinées à soulever la feuille supérieure de l'enveloppe de protection bien au-dessus du niveau que pourrait atteindre le disque, sont constituées par des découpes en U du support. Ce découpage est effectué à chaud pour permettre aux languettes ainsi formées de rester relevées par rapport au plan du support. Ces deux empreintes 7 et 8 sont légèrement élastiques et ont leurs extrémités 9 recourbées pour ne pas risquer d'accrocher la feuille supérieure de l'enveloppe lors du transfert du support à l'intérieur de celle-ci.

**Revendications**

1. Conteneur pour vidéodisque du type comprenant un support (12) pour le disque, une enveloppe de protection (1) ayant une tranche ouverte qui permet l'introduction latérale de ce support dans l'enveloppe, les moyens de préhension et d'entraînement de l'enveloppe constitués par les deux marges latérales (2 et 3) et des moyens de guidage pour centrer le vidéodisque sur le support réalisé dans un matériau plastique moulé, cette enveloppe protectrice (1) étant constituée de deux feuilles de matériau plastique souple (5 et 6), ou d'une feuille dont une partie est repliée, une de ces feuilles (5), ou l'une des parties repliées, étant préformée au niveau des deux marges latérales (2 et 3) de préhension de l'enveloppe, et ce préformage créant les faces internes de contact entre la partie repliée, ou l'une des feuilles, et les bords du support (12), caractérisé en ce que les marges latérales de préhension (2 et 3) comprennent, sur l'une de leurs faces, des crans (4) sur toute leur longueur formant des crémaillères qui servent à la préhension et à l'entraînement de l'enveloppe (1) parallèlement à ces marges dans un dispositif de lecture de vidéodisque.

2. Conteneur pour vidéodisque selon la revendication 1, caractérisé en ce que le matériau de l'enveloppe (1) est du polychlorure de vinyle (PVC).

3. Conteneur pour vidéodisque selon la revendication 2, caractérisé en ce que les crans (4) disposés sur les marges de préhension (2 et 3) sont réalisés par soudure utilisant les pertes diélectriques du polychlorure de vinyle.

4. Conteneur pour vidéodisque selon la revendication 3, caractérisé en ce que la soudure est réalisée à l'aide d'une électrode à crémaillère.

5. Conteneur pour vidéodisque selon la revendication 1, caractérisé en ce qu'une feuille de matériau non tissé ou une feuille de papier traité est fixée sur la partie de l'enveloppe (1), en vis-à-vis de la face gravée du vidéodisque.

6. Conteneur pour vidéodisque selon l'une des revendications 1 à 5, caractérisé en ce qu'une feuille de matériau non tissé ou de papier traité est fixée sur la face du support (12) sur laquelle repose le disque.

7. Conteneur pour vidéodisque selon l'une des revendications 1 à 6, caractérisé en ce que la tranche ouverte de l'enveloppe (1) est obturable à l'aide d'un rabat (15) en équerre réalisé en un matériau relativement rigide, comportant un petit côté dont l'extrémité est réunie de façon pivotable à l'extrémité de la paroi inférieure de celle-ci.

8. Conteneur pour vidéodisque selon l'une des revendications 1 à 7, caractérisé en ce que la partie avant du support (12) comporte des empreintes (7 et 8) destinées à écarter les deux faces internes de l'enveloppe, entre lesquelles est placé le vidéodisque.

9. Conteneur pour vidéodisque selon la revendication 1, caractérisé en ce que les marges de préhension (2 et 3) comprennent des repères (13a, 13b ; 14a, 14b) permettant de déclencher les différentes phases d'injection ou d'éjection du disque, la position des repères pouvant être fonction du format du disque.

## Claims

1. A video record container of the type comprising a support (12) for the record, a protective envelope (1) having an open edge allowing said support to be introduced laterally into said envelope, envelope gripping and driving means constituted by two lateral margins (2 and 3), and guiding means for centering the video record on the support which is made of moulded plastic material, said protective envelope (1) being constituted by two foils (5 and 6) of flexible plastic material, or by a single foil a portion of which is folded back, one of said foils (5), or one of the folded-back portions being pre-shaped in the area adjacent to said lateral gripping margins (2 and 3) of the envelope, the pre-shaped portions defining the inner contact faces between said folded-back portion, or one of said foils, and the margins of said support (12), characterized in that the lateral gripping margins (2 and 3) are provided on one of their faces, over their entire length, with cogs (4) forming racks providing for gripping and driving said envelope (1) parallel to said margins in a video record reading device.

2. A video record container according to claim 1, characterized in that the material forming said envelope (1) is polyvinylchloride (PVC).

3. A video record container according to claim 2, characterized in that the cogs (4) provided on said gripping margins (2 and 3) are produced by welding using the dielectric losses of the polyvinylchloride.

4. A video record container according to claim 3, characterized in that the welding is carried out by means of a rack-shaped electrode.

5. A video record container according to claim 1, characterized in that a foil of non-woven material or a foil of treated paper is fixed on the portion of the envelope which faces the engraved surface of the video record.

6. A video record container according to any one of claims 1 to 5, characterized in that a foil of non-woven material or a foil of treated paper is fixed on the face of said support (12) on which rests said record.

7. A video record container according to any one of claims 1 to 6, characterized in that the open edge of said envelope (1) is adapted to be closed by an L-shaped flap of comparatively rigid material, which has a small side portion the end of which is pivotally connected to the end of the lower wall thereof.

8. A video record container according to any one of claims 1 to 7, characterized in that the front portion of said support (12) is provided with stamped portions (7 and 8) adapted to spread apart the two inner faces of said envelope, between which said video record is placed.

9. A video record container according to claim 1, characterized in that said gripping margins (2 and 3) are provided with markings (13a, 13b ; 14a, 14b) adapted to initiate the various steps of injection or ejection of said record, the position of said markings being possibly dependent on the size of said record.

## Ansprüche

1. Videoplattenbehälter mit einem Plattenträger (12), einer Schutztasche (1), deren eine Kante offen ist und die seitliche Einführung des Trägers in die Tasche gestattet, sowie mit durch die beiden seitlichen Ränder (2 und 3) gebildeten Greif = und Antriebsmittel für die Tasche und mit Führungsmitteln zum Zentrieren der Videoplatte auf aus gegossenem Kunststoff geformten Träger, wobei die Schutztasche (1) aus zwei flexiblen Kunststoff-Folien (5 und 6) bzw. aus einer teilweise umgefalteten Folie besteht, und wobei einer dieser Folien (5) bzw. einer umgefalteten Folienteile im Bereich der beiden seitlichen Greifränder (2 und 3) der Tasche vorgeformt ist und die vorgeformten Abschnitte die inneren Berührungsflächen zwischen dem umgefalteten Folienteil bzw. einer der Folien und den Rändern des Trägers (12) bilden, dadurch gekennzeichnet, dass die seitlichen Greifränder (2 und 3) auf einer ihrer Oberflächen und auf ihrer gesamten Länge Zahnrasten (4) aufweisen, welche Zahnstangen bilden, die das Greifen und Antreiben der Tasche (1) parallel zu diesen Rändern in einem Videoplattenwiedergabegerät gestatten.

2. Videoplattenbehälter nach Anspruch 1, dadurch gekennzeichnet, dass die Tasche (1) aus Polyvinylchlorid (PVC) besteht.

3. Videoplattenbehälter nach Anspruch 2, dadurch gekennzeichnet, dass die in den Greifrändern (2 und 3) angeordneten Zahnrasten (4) durch Schweissen unter Ausnützung der dielektrischen Verluste des Polyvinylchlorids erzeugt sind.

4. Videoplattenbehälter nach Anspruch 3, dadurch gekennzeichnet, dass das Schweissen vermittels einer gezahnten Elektrode erfolgt.

5. Videoplattenbehälter nach Anspruch 1, dadurch gekennzeichnet, dass der gravierten Videoplattenfläche gegenüberliegende Teil der Tasche (1) mit einer an ihm befestigten Folie aus nicht gewebtem Material oder aus behandeltem Papier versehen ist.

6. Videoplattenbehälter nach einem der Ansprüche 1 bis 5, dadurch gekennzeichnet, dass an der Oberfläche des Trägers (12), auf der die Platte ruht, eine Folie aus nicht gewebtem Material oder aus behandeltem Papier befestigt ist.

7. Videoplattenbehälter nach einem der Ansprüche 1 bis 6, dadurch gekennzeichnet, dass die offene Kante der Tasche (1) vermittels einer winkelbandförmigen, aus verhältnismässig steifem Material bestehenden Klappe (15) verschliessbar ist, die einen schmalen Seitenteil aufweist, dessen Ende mit dem Ende der unteren Wandung derselben schwenkbar verbunden ist.

8. Videoplattenbehälter nach einem der Ansprüche 1 bis 7, dadurch gekennzeichnet, dass der vordere Teil des Trägers (12) Prägungen (7 und 8) aufweist, die dazu dienen, die Innenflächen der Tasche, zwischen welchen die Videoplatte eingebracht ist, auseinander zu spreizen.

9. Videoplattenbehälter nach Anspruch 1, dadurch gekennzeichnet, dass die Greifränder (2 und 3) Markierungen (13a, 13b ; 14a, 14b) aufweisen, vermittels welcher die Verschiedenen Platten-Einführ = ader Auswerfvorgänge auslösbar sind, wobei die Lage der Markierungen vom Format der Platte abhängig sein kann.

FIG.1

FIG. 2